# EUROPEAN PATENT SPECIFICATION

(11) **EP 2 242 946 B1**
(45) Date of publication and mention of the grant of the patent: **27.02.2013**
(21) Application number: 09705279.9
(22) Date of filing: 05.01.2009
(51) Int. Cl.: F16K 31/528

(54) **VALVE ACTUATOR**
VENTILAKTOR
ACTIONNEUR DE SOUPAPE

(30) Priority: 28.01.2008 IT PR20080006
(43) Date of publication of application: 27.10.2010
(73) Proprietor: DVG Automation S.P.A., 29016 Cortemaggiore (Piacenza) (IT)
(72) Inventor: DORDONI, FILIPPO, 29016 Cortemaggiore (Piacenza) (IT)
(74) Representative: Guareschi, Antonella
(86) International application number: PCT/IB2009/050004
(87) International publication number: WO 2009/095800

(56) References cited:
- US-A- 3 910 165
- US-A- 3 929 024

## Description

The present invention relates to a valve actuator, i.e. a device for converting a reciprocating rectilinear motion into a reciprocating angular motion and vice versa.

Devices are known to be used in the art of valve actuators for converting the rectilinear motion of an actuator into a rotary motion of a valve stem, or vice versa, by a mechanism known as sliding block linkage.

Namely, a sliding block linkage allows conversion of the uniform rotary motion of a flywheel driven by a motor into a reciprocating rectilinear motion.

An example of prior art is described in US3929024; it relates a device for causing a valve to open or close, including an oscillatable yoke, the yoke having a depending arm with elongated slot therein, a reciprocable piston rod linked to said yoke, the linkage including an upstanding pin engaging said slot, the pin being positioned non-axially relative to the piston rod. An oscillatable yoke is positioned within a housing, and includes key means for affixing a valve stem thereto. One or more aligned piston rods, caused to reciprocate by an outside power source, may so move within the housing. Said rod or rods are fixed to a plate member. Additionally, said plate carries a further upright pin, which pin extends within or through a slot provided an arm of the oscillatable yoke. This latter mentioned pin is positioned on said plate intermediate the axis of said piston rod or rods and the body of said yoke, i.e., offset relative to said piston axis. Thus, approximately a 90 degree arc may be traversed by the yoke while the line of piston rod reciprocation is substantially removed from the yoke body. In said embodiment, a like pin would pass through oppositely disposed apertures in plates. In the event that plural power cylinders were used, or if one were a spring return cylinder, a piston rod counterpart to rod would be linked to said plates by pin. The ends of both pins extend beyond plates, and carry rollers. These rollers ride between, are guided by, and transmit forces to the side rails forming tracks in both upper and lower cover plates.

In other words, respect to the present invention, in said prior art:
- the cylinders is guided by side rails forming tracks in both upper and lower cover plates.
- There are three pins; the first one passes through aperture through rod and on through apertures in plates, the second one passes through the oppositely disposed apertures in said plates, while the third pin passes through said apertures and said roller. Each pins aren't fixed but slide in conjunction with the piston rod. Moreover said pins are vertical disposed and are movable in the rails.

Another prior art is disclosed in the patent US3910165 which discloses a piston-containing cylinder includes tie rod or rods extending therethrough. Within the pneumatically or hydraulically pressurized cylinder, the piston rides along and is guided by the tie rods. The rod portions can extend without the cylinder, and be fixed and serve as guides for a block which block reciprocates with the piston. This may cause movement of some further member, such as cause the rotation of a yoke, which yoke may be keyed to a valve stem.

The actuator has a power driven piston reciprocatingly positioned within a cylinder, and a piston rod linked at one end to said piston with said piston rod's other end extending outside of said cylinder, the improvement comprising: spaced guide rods within said cylinder, and fixed to said cylinder at opposite ends thereof, said piston slidably engaging said guide rods. The structure exterior of the cylinder may be physically within an integrated structure, such as the central housing of an actuator, or may comprise a portion of a separate device. Support rods are fixed at one end to cylinder.

Within cylinder, a pair of tie rods are seen to extend therethrough and to have their ends fixed to the exterior of cylinder end plates. Within the cylinder, piston reciprocates and includes means such as apertures for slidingly engaging and being guided by rods.

In other words the rods extend, and are included, in the pneumatically or hydraulically pressurized cylinder while in the present application the guiding rods are integral with two inner, opposite walls of the case.

The object of the present invention is to provide a device for valve actuators that can ensure conversion of reciprocating linear motion into reciprocating rotary motion and vice versa, with features to:
- reduce friction of moving parts,
- optimize the distribution of sliding components by using a number of rectilinear guiding rods, in such an arrangement as to neutralize any torque on the device

These objects and advantages are achieved by a device for converting a reciprocating rectilinear motion into a reciprocating angular motion and vice versa, according to the present invention, which is characterized by the annexed claim.

This and other features will be more apparent from the following description of a few embodiments, which are shown by way of example and without limitation in the accompanying drawings, in which:
- Figure 1 is a perspective view of a drive device for valve actuators of the present invention
- Figure 2 shows the motion conversion device proper of the device as shown in Figure 1,
- Figure 3 shows the slider and the guiding rods of the linear translation mechanism of the device of Figure 1,
- Figure 4 is a top view of the device of Figure 2.

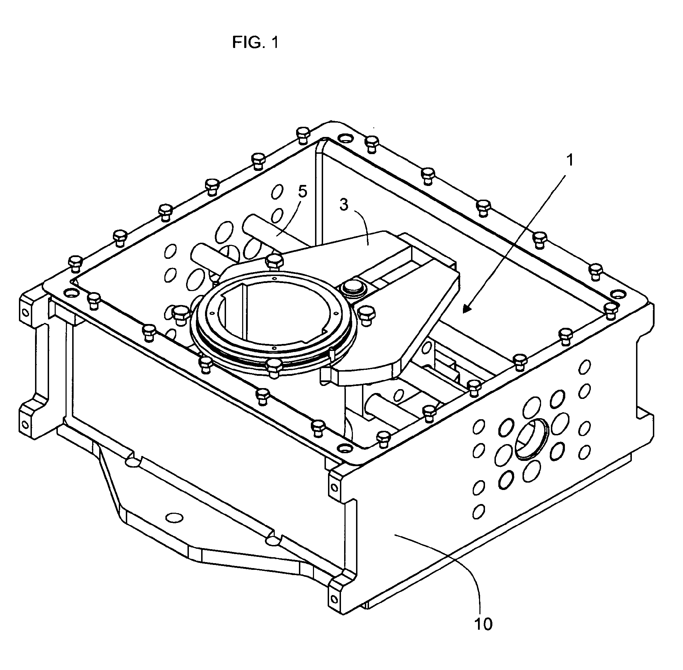

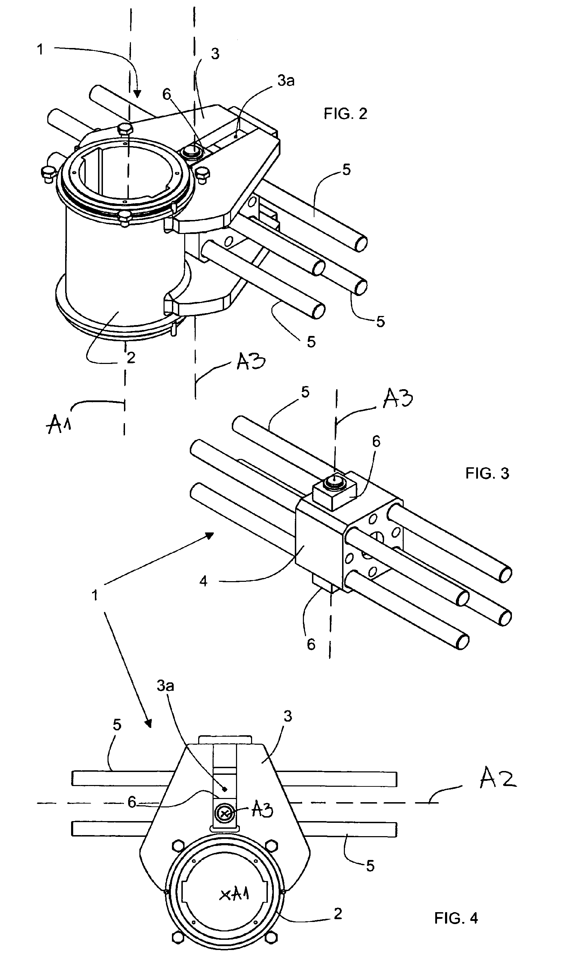

Referring to Figures 1, 2, 3 and 4, numeral 1 generally designates a valve actuator, i.e. a device for converting a reciprocating rectilinear motion into a reciprocating angular rotary motion.

Namely, the device 1 comprises a case 10 for housing the rectilinear/rotary motion converting components.

Here, a sleeve 2 may be seen, here having a hollow cylindrical section, which is adapted to be keyed to a corresponding shaft (not shown) such as a valve driving shaft or the like, to cause rotation about its axis A1.

A pair of forks 3 extend perpendicular to the axis A1 of said sleeve 2, and are adapted to hold an element 6 in the gap or groove 3a created between the fork prongs, which element projects vertically, along an axis A3, from a slider 4 and is attached thereto, for instance, by suitable threads.

The above part 6 may be of any shape whatever, as long as it may be keyed into the corresponding groove 3a.

The above slider 4 is capable of linear sliding motion, due to the action of a stem which is in turn controlled, for example, by a hydraulic or pneumatic cylinder and is free to slide on equally spaced guiding rods 5, relative to the center of application of the stem of the slider 4

The guiding rods 5 are integral with two inner, opposite walls of the case 10 and their purpose is to prevent torques or rotation moments from building up on the slider 4 as the latter slides along the rods 5.

The center of application of the stem on the slider will preferably correspond to the center of gravity of the latter.

Therefore, the slider 4 will be displaced by a linear motion, perpendicular to the above axes A1 and A3, as shown by the reference A2, to cause linear motion upon rotation of the sleeve 2: the guiding rods 5 are obviously perpendicular to the axis of the sleeve 2, for rectilinear/rotary motion conversion.

While the embodiment as shown herein has four guiding rods 5, there may be also three or more of such guides, without departure from the scope of the invention, which are all equally spaced from the center of application of the stem, i.e. arranged at the vertices of a regular polygon whose center of gravity is the center of application of the stem.

## Claims

1. A valve actuator (1) of the type adapted to convert a reciprocating rectilinear motion into a reciprocating angular motion and vice versa, said valve actuator (1) of the type comprising a case 10 for housing the rectilinear/rotary motion converting components
a. a sleeve (2) adapted to be keyed to a corresponding shaft such as a valve driving shaft or the like, to cause rotation about its axis (A1)
b. a pair of forks (3), extending perpendicular to the axis (A1) of said sleeve (2), adapted to hold an
c. element (6) in the gap or groove (3a) created between the fork prongs, said element (6) projecting vertically, along an axis (A3), from
d. a slider (4), free to slide on guiding rods (5) integral with two inner, opposite walls of the case (10), so that said slider (4) is capable of linear sliding motion along an axis (A2), perpendicular to the above axes (A1) and (A3), to cause linear motion upon rotation of the sleeve (2);
**characterized in that** said guiding rods (5) are three or more and:
- perpendicular to the axis of the sleeve (2), for rectilinear/rotary motion conversion,
- equally spaced from the center of gravity of the slider (4) and arranged to define the vertices of a regular polygon.

## Patentansprüche

1. Ventilstellglied (1) des Typs der geeignet ist, eine hin-und hergehende geradlinige Bewegung in eine hin-und hergehende Winkelbewegung und umgekehrt umzuwandeln, wobei das besagte Ventilstellglied (1) dem Typ gehört, das ein Gehäuse 10 umfasst, um folgende Teile, die die geradlinige/Drehbewegung umwandeln, aufzunehmen:
a. eine Hülse (2), die geeignet ist, auf einer entsprechenden Welle nach der Art einer Antriebswelle eines Ventils oder dergleichen befestigt zu werden, zum Verursachen einer Rotation um ihre Achse (A1)
b. ein Paar Gabeln (3), die sich senkrecht zur Achse (A1) der genannten Hülse (2) erstrecken und so angepasst sind,
c. dass sie ein Glied (6) im leeren Raum oder in der zwischen den Zähnen der Gabeln geschaffenen Rille halten, wobei das besagte Glied (5) vertikal entlang einer Achse (A3), aus
d. einem Schieber (4) auskragt, der frei auf Führungsstangen (5) integriert mit zwei entgegengesetzten inneren Wänden des Gehäuses (10) gleitet, so dass der besagte Schieber (4) in der Lage ist, eine lineare Gleitbewegung entlang einer Achse (A2) senkrecht zu den oben genannten Achsen (A1) und (A3) durchzuführen, um eine lineare Bewegung durch eine Drehung der Hülse (2) zu verursachen;
**dadurch gekennzeichnet, dass** die besagten Führungsstangen (5) drei und mehr sind; und
- sie sind senkrecht zur Achse der Hülse (2) angeordnet, um eine Umwandlung zwischen einer geradlinigen und Drehbewegung durchzuführen,
- sie werden gleichmäßig vom Zentrum der Schwerkraft des Schiebers (4) beanstandet, um so die Ecken eines regelmäßigen Polygons zu definieren.

## Revendications

1. Actionneur de soupape (1) de type adapté pour convertir un mouvement rectiligne alternatif en un mouvement da va et vient angulaire et vice versa, ledit actionneur de soupape (1) de type comprenant un boîtier 10 pour loger les composants qui convertissent le mouvement rectiligne/rotatifs :
a. un manchon (2) adapté pour être calé sur un arbre correspondant comme un arbre d'actionnement d'une soupape ou similaire, pour provoquer une rotation autour de son axe (A1)
b. une paire de fourches (3) qui s'étendent perpendiculairement à l'axe (A1) dudit manchon (2), adaptées pour fixer un
c. élément (6) dans la fente ou rainure (3a) crées entre les pointes des fourches, ledit élément (6) faisant saillie verticalement le long de l'axe (A3), à partir
d. d'un curseur (4), libre de coulisser sur des tiges de guidage (5) solidaires avec deux parois intérieures opposées du boîtier (10), de sorte que ledit curseur (4) est capable d'un mouvement coulissant linéaire le long d'un axe (A2), perpendiculaire aux axes ci-dessous (A1) et (A3), pour provoquer un mouvement linéaire pendant la rotation du manchon (2),
**caractérisé en ce que** lesdites tiges de guidage (5) sont trois ou plus et :
- elles sont perpendiculaires à l'axe du manchon (2), pour une conversion d'un mouvement rectiligne/rotatif,
- elles sont équidistantes du centre de gravité du curseur (4) et agencées pour définir les sommets d'un polygone régulier.
